# EUROPÄISCHE PATENTSCHRIFT

(11) **EP 2 297 669 B1**
(45) Veröffentlichungstag und Bekanntmachung des Hinweises auf die Patenterteilung: **05.03.2014**
(21) Anmeldenummer: 09768825.3
(22) Anmeldetag: 19.06.2009
(51) Int. Cl.: G06K 1/12, G06K 19/06

(54) **VERFAHREN ZUR EINZELSTÜCKVERFOLGUNG METALLISCHER HOHLKÖRPER**
METHOD FOR THE INDIVIDUAL TRACKING OF METALLIC HOLLOW BODIES
PROCÉDÉ PERMETTANT UN SUIVI DE CORPS CREUX MÉTALLIQUES EN TANT QUE PIÈCES INDIVIDUELLES

(30) Priorität: 26.06.2008 DE 102008030183
(43) Veröffentlichungstag der Anmeldung: 23.03.2011
(73) Patentinhaber: Vallourec Deutschland GmbH, 40472 Düsseldorf (DE)
(72) Erfinder: VAN WELL, Dirk, 44625 Herne (DE); ACHTERKAMP, Manfred, 46240 Bottrop (DE); EICHLER, Michael, 41334 Nettetal (DE)
(74) Vertreter: Meissner, Peter E.
(86) Internationale Anmeldenummer: PCT/DE2009/000866
(87) Internationale Veröffentlichungsnummer: WO 2009/155901

(56) Entgegenhaltungen:
- DE-B3-102004 051 124
- DE-C2- 19 505 513
- FR-A- 2 675 291
- US-A- 5 481 100

## Beschreibung

Die Erfindung betrifft ein Verfahren zur Einzelstückverfolgung metallischer Hohlkörper, insbesondere von warmgefertigten Rohren aus Stahl.

Im Rahmen der Optimierung der Qualitätssicherung und der Kosten im Fertigungsablauf bei der Adjustierung warmgefertigter Rohre ist die Rückverfolgbarkeit des gefertigten Produktes, d. h. wann ist was wo wie gefertigt worden, von maßgeblicher Bedeutung.

Untrennbar damit verbunden ist die unverwechselbare Identifizierung jedes einzelnen Rohres beim Durchlaufen aller vorgegebenen Fertigungs- und Prüfschritte. Vor allem in Bereichen mit einer typischen Massenfertigung, wie in einem Rohrwerk wo hunderte bis tausende einzelner Rohre gleichzeitig bewegt, bearbeitet und geprüft werden, ist die Einzelstückverfolgung ein zentrales Thema.

In der Vergangenheit sind verschiedene Verfahren zur Identifizierung jedes einzelnen Stückes im Sinne einer Verfolgung angewandt worden, die den heutigen Anforderungen jedoch nicht mehr gerecht werden.

Beispielsweise wird in vielen Fällen als kleinste Identeinheit das Walz- oder Fertigungslos gewählt, wobei üblicherweise die gleiche Schmelze und die gleiche Endabmessung ein Los bilden.

Die Stückzahl eines Loses wird eingangs entweder von Hand oder über ein Zählgerät ermittelt und während des Durchlaufs wird der Ausfall eines oder mehrerer Stücke an den einzelnen Stationen festgehalten.

Bei größeren Losen wird das Los noch in Bunde unterteilt, wobei jedes Bund eine fortlaufende Nummer erhält. Die Identifikation einzelner Stücke erfolgt über zumeist mit Drähten zusammengehaltene Bunde bzw. über das Lös, beispielsweise indem eine Identkarte mit einem gebogenen Draht in eines der Rohre gesteckt wird.

Beim Transport der Bunde mitunter quer durch mehrere Hallenschiffe ist nicht auszuschließen, dass Identkarten verloren gehen oder beim Öffnen der Bunde verlegt oder versehentlich in falsche Bunde gesteckt werden.

Andere Systeme arbeiten mit von Hand aufgepinselten oder maschinell eingeschlagenen Identnummern, mit aufgeklebten oder aufgestanzten Etiketten oder mit von Lasern eingravierten Identifizierungen.

Alle diese bekannten Verfahren haben Nachteile, weil die jeweils aufgebrachte Identifizierung entweder nicht immer ablesbar ist, z. B. wenn sich das Etikett auf der Unterseite des Rohres befindet oder die aufgebrachte Identifizierung bei einer Prüfung stört, z. B. weil sie bei einer US- Prüfung zu Fehlanzeigen führt oder die Identnummer bei zu hoher Transportgeschwindigkeit der Rohre nicht mehr lesbar ist oder die Zuverlässigkeit der Erfassung während des Durchlaufes durch alle vorgeschriebenen Fertigungs- und Prüfschritte nicht gegeben ist.

Aus der DE 195 05 513 C2 ist ein Verfahren bekannt, bei dem jeweils ein Barcode durch Farbmarkierungen unmittelbar auf jedes einzelne Werkstück aufgegeben wird und zwar mit einer Erstreckung über den gesamten Querumfang des Rohres. Damit ist das Ablesen des Barcodes unabhängig von der Umfangslage des Rohres. Die Erfassung des Barcodes erfolgt per Videobild, so dass die Erfassung ebenfalls unabhängig von der Transportrichtung ist.

Dieses bekannte Verfahren zur Einzelstückverfolgung hat mehrere Nachteile. Bedingt durch das Handling der Rohre beim Durchlauf durch die einzelnen Fertigungs- und Prüfeinrichtungen sowie beim Abrollen der Rohre auf den Rollgängen kann der mittels Farbmarkierungen aufgebrachte Barcode beschädigt und dadurch die optische Erfassung der Identifizierung erschwert oder sogar unmöglich werden.

Zur sicheren optischen Erfassung des Barcodes dürfen die Strichmarkierungen wegen der walzrauhen Oberfläche der Rohre je nach Oberflächengüte nicht zu schmal gewählt werden, da mit Ausfransungen gerechnet werden muss, die das Auswertesystem nicht mehr als getrennte Farbstriche unterscheiden kann. Dies führt zu einer bis zu 500 mm langen axialen Erstreckung des Barcodes, der oftmals vom Kunden aus optischen Gründen abgelehnt wird.

Ein gattungsgemäßes Verfahren ist in der DE 10 2004 051 124 B3, das den Oberbegriff des Anspruchs 1 bildet, offenbart. Bei diesem Verfahren wird das einzelne Rohr nach einem letzten Warmarbeitsgang mit einer unverwechselbaren über den gesamten Rohrumfang sich erstreckenden Identifizierung versehen und im Zulaufbereich zu den nachfolgenden Fertigungs- oder Prüfstationen während des Weitertransportes unabhängig von der Transportrichtung automatisch als Videobild abgelesen. Dabei wird die unverwechselbare Identifizierung als Data-Matrix-Code in mehrfacher identischer Wiederholung auf den Rohrumfang aufgebracht.

Die Data-Matrix-Codes werden dabei in einer oder in mehreren Spuren ringförmig oder schraubentinienförmig in einem oder in mehreren Rohrumläufen aufgebracht.

Die Einzelstückverfolgung von mit Data-Matrix-Codes beschrifteten Rohren hat sich in der Praxis in hervorragender Weise bewährt, es hat sich jedoch gezeigt, dass eine ringförmige oder schraubenlinienförmige, kontinuierlich um das Rohr herum aufgebrachte Beschriftung einige Nachteile aufweist.

Bei Rollgängen, die keine Rotation des Rohres zulassen, ist es erforderlich, dass die Signier-einheit vollständig um das Rohr rotiert, um so eine vollumfängliche Signierung zu ermöglichen. Dies ist im Hinblick auf die Auslegung der Stromzuführung über Schleifkontakte und der Kabel- bzw. Schlauchrohrführung der Signiereinheit sehr aufwändig.

Bei einer geschlossenen, kreisringförmig um das Rohr umlaufenden Beschriftung kommt es darüber hinaus oftmals zu einem radialen Überschreiben der Spur im Anfangs- bzw. Endbereich, so dass hier der Code nicht mehr auslesbar ist.

Aufgabe der Erfindung ist es, das bekannte Verfahren zur Einzelstückverfolgung von warmgefertigten Rohren so zu verbessern, dass auch bei Rollgängen, die eine Rotation des Rohres nicht zulassen, die Beschriftung mit unverwechselbarer Identifizierung als Data-Matrix-Codes in mehrfacher identischer Wiederholung auf dem Rohrumfang in einfacher und kostengünstiger Weise möglich ist und ein Überschreiben der Spur bei kreisförmiger Anordnung sicher vermieden werden kann.

Erfindungsgemäß wird die Aufgabe durch ein Verfahren gemäß dem Anspruch 1 gelöst. Die Beschriftung des Rohr-umfanges erfolgt in mindestens zwei den Rohrumfang aufteilenden segmentierten Abschnitten, wobei die Beschriftung segmentweise mit einer Drehung der Signiereinheit von weniger als 360° vorgenommen wird und die Segmente bezogen auf die Rohrlängsachse einen Versatz aufweisen, der größer ist als die axiale Erstreckung des Data-Matrix-Codes.

Im Unterschied zu dem aus der DE 10 2004 051 124 B3 bekannten Verfahren, wird die Identifizierung nicht mehr in einer geschlossenen ringförmigen Spur auf das Rohr aufgebracht, sondern der Ring wird in einzelne Segmente unterteilt, wobei die Beschriftung so erfolgt, dass die Signiereinheit die Beschriftung segmentweise unter einer Drehung von weniger als 360° vornimmt, wobei die Segmente einen axialen Versatz zueinander aufweisen, der größer ist als die axiale Erstreckung des Data-Matrix-Codes. Dieser axiale Versatz ist wichtig, um ein Überschreiben beim Aufbringen der einzelnen Segmente in radialer Richtung zu vermeiden.

Bei kreisringförmiger Anordnung von zwei Segmenten werden diese vorteilhaft in Kreisbögen von je mindestens 180° auf das Rohr aufgebracht. Die Kreisbogensegmente können auch größer als 180° ausgebildet sein, da ein Überschreiben durch den axialen Versatz der Segmente auf dem Rohr ausgeschlossen ist.

In einer ersten Ausführungsform erfolgt die Beschriftung des Rohrumfanges mit nur einem Signierkopf, wobei die Drehrichtung der Signiereinheit nach dem Aufbringen eines ersten Segmentes geändert wird und anschließend ein zweites Segment auf den Rohrumfang aufgebracht wird.

Hierbei wird zunächst das erste 180°-Segment auf das Rohr aufgebracht, danach wird die Drehrichtung der Signiereinheit geändert und das zweite 180°-Segment mit einem axialen Versatz in der Weise auf das Rohr aufgebracht, dass sich eine vollumfängliche Beschriftung ergibt.

Durch die Änderung der Drehrichtung wird auf vorteilhafte Weise einerseits eine vollständige Drehung der Signiereinheit mit den zuvor beschriebenen Nachteilen um das Rohr vermieden, anderseits wird mit einem axialen Versatz eine vollständige kreisringförmige Beschriftung des Rohres erreicht und ein Überschreiben der Identifizierungen in radialer Richtung sicher vermieden.

In einer vorteilhaften Weiterbildung der Erfindung wird der Rohrumfang nicht nur mit einem Signierkopf sondern gleichzeitig mit mehreren Signierköpfen beschriftet. Dies hat den Vorteil einer wesentlich schnelleren Beschriftung, wenn über dem Umfang des Rohres mehrere kreisringförmige Beschriftungen der Data-Matrix-Codes aufgebracht werden sollen. Vorteilhaft werden in diesem Fall die Signierköpfe so um das Rohr herum angeordnet, dass Segmente in einer der Anzahl der Signierköpfe entsprechenden Teilung des Rohrumfangs entstehen. Bei z. B. drei Signierköpfen werden diese vorteilhaft mit einer Kreisteilung von jeweils 120° um das Rohr mit einem axialen Abstand zueinander in der Signiereinheit positioniert, so dass mit einer Drehung um 120° der Signiereinheit der komplette Rohrumfang beschriftet werden kann. Bei vier oder mehr Signierköpfen ergeben sich dadurch entsprechende Kreisteilungen. Grundsätzlich sind die Kreisteilungen jedoch entsprechend den betrieblichen Erfordernissen frei wählbar.

Sollen weitere kreisringförmige Beschriftungen erfolgen, können diese zusammen mit der ersten gleichzeitig erfolgen, wenn axial versetzt ebenfalls eine entsprechende Anzahl an Signierköpfen in der Signiereinheit angeordnet ist. Dadurch ist es möglich, mit einer einzigen der Kreisteilung entsprechenden Drehung der Signiereinheit die Beschriftung über den gesamten Umfang wie auch in der vorgesehenen Anzahl über die Rohrlänge gleichzeitig aufzubringen.

Um den Aufwand für die Konstruktion der Signiereinheit in Grenzen zu halten, ist es auch möglich, die weiteren kreisringförmigen Anordnungen nacheinander auf das Rohr aufzubringen. Hierbei wird entweder die Signiereinheit über dem Rohr oder das Rohr unter der Signiereinheit axial so weit vorgefahren, dass der axiale Abstand von einem Segment zum benachbarten größer ist, als die Breite des Data-Matrix-Codes, um ein Überschreiben auch in axialer Richtung sicher zu vermeiden.

Weitere Merkmale, Vorteile und Einzelheiten der Erfindung ergeben sich aus der nachfolgenden Beschreibung.

Es zeigen:
- **Figur 1**: eine schematische Darstellung des erfindungsgemäßen Verfahrens mit einer Beschriftung des Rohrumfangs mit zwei Segmenten,
- **Figur 2**: wie Figur 1, jedoch mit einer Beschriftung des Rohrumfangs mit drei Segmenten.

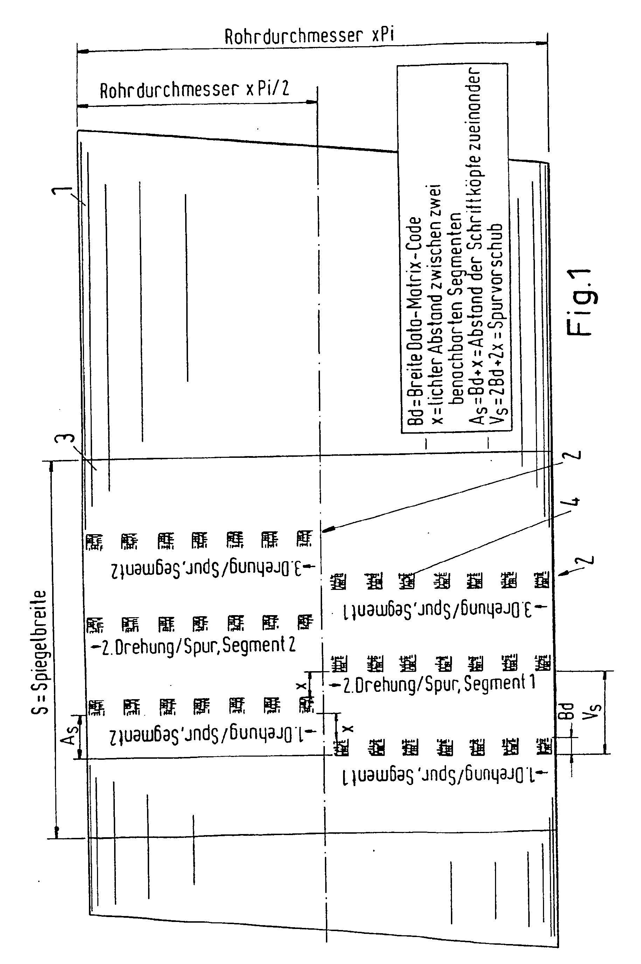

**Figur 1** zeigt eine schematische Darstellung des erfindungsgemäßen Verfahrens mit einer Beschriftung des Rohrumfangs mit zwei Segmenten. Gezeigt ist die Abwicklung des Umfangs eines Rohres 1, wobei der Rohrumfang über jeweils 180° mit zwei axial versetzten Segmenten 2 mit Data-Matrix-Codes 4 beschriftet wird.

### 1. Beschreibung einer ersten Ausführungsform der Markiereinheit gemäß Figur 1

Die zur Durchführung des erfindungsgemäßen Verfahrens gemäß **Figur 1** verwendete Markiereinheit lässt sich wie folgt beschreiben, wobei Vorrichtungsmerkmale nicht dargestellt sind und je nach betrieblichen Erfordernissen abgeändert werden können.
a. Das zu beschriftende Rohr 1 ruht auf einem Rollgang.
b. Um das Rohr 1 ist ein motorisch angetriebener Drehkranz mit der Signiereinrichtung angeordnet, dessen Mitte über eine Höhenverstelleinrichtung der Rohrmittenlage angepasst wird. Des Weiteren kann der Drehkranz über eine Längsverstelleinrichtung entlang der Rohrachse verfahren werden.
c. Am Umfang des Drehkranzes befinden sich zum Auftragen der für einen Kontrast der Beschriftung zum Untergrund notwendigen Spiegelfarbe zwei Sprühpistolen, die zum Auftragen des Farbspiegels 3 ebenfalls jeweils um 180° versetzt gegenüberliegend angeordnet sind.
d. Am Umfang des Drehkranzes befinden sich zum Schreiben der Data-Matrix-Codes 4 in diesem Fall zwei Signierköpfe (z. B. Continous Inkjet oder Laser), die jeweils um 180° versetzt im Abstand Aₛ (Aₛ= Bd + x, mit Bd = Breite oder axiale Erstreckung der Data-Matrix-Code und x = Abstand der Signierköpfe zueinander) entlang der Längsachse des Rohres angeordnet sind. Der Abstand x wird je nach Anforderungen festgelegt, ist aber immer größer als Null.
e. Sowohl die Sprühpistolen als auch die Signierköpfe sind am Drehkranz über eine Verstelleinrichtung, die senkrecht zum Rohrdurchmesser bewegbar ist, befestigt, um einen definierten Abstand zur Rohroberfläche bei unterschiedlichen Durchmessern zu gewährleisten.

Grundsätzlich lässt sich der Ablauf zur Beschriftung des Rohres 1 gemäß **Figur 1** mit dem erfindungsgemäßen Verfahren wie folgt beschreiben:

### 2. Durchführung der Markierung gemäß Figur 1

a) Der (hier nicht dargestellte) Drehkranz dreht sich bei eingeschalteten Sprühpistolen zur Aufbringung des Farbspiegels 3 in einer Richtung. Beim Erreichen von ca. +180° werden die Sprühpistolen abgeschaltet. Dadurch entsteht ein geschlossener Farbspiegel 3 um den gesamten Rohrumfang mit einer Breite S, der abhängig ist vom Sprühwinkel der Pistolen.
b) Die Signierköpfe starten die Beschriftung mit den Data-Matrix-Codes 4 mit Beginn des jeweiligen Farbspiegels 3. Nach einem Winkel größer/gleich +180° stoppt die Drehung des Drehkranzes und die Beschriftung durch die Signierköpfe. Hierdurch erhält das Rohr eine kreisringförmige Markierung aus Data-Matrix-Codes über den gesamten Umfang, bestehend aus zwei axial versetzten Segmenten.
c) Soll eine weitere kreisringförmige Markierung aufgebracht werden, verfährt der gesamte Drehkranz über seine Längsverstellvorrichtung (Spurvorschub) um einen Wert Vₛ (mit Vₛ = 2 x Bd + 2 · x) und startet dann die Beschriftung in umgekehrter Drehrichtung bis zum Winkel kleiner/gleich 0°.
d) Für weitere kreisringförmige Markierungen wird analog zu c) mit jeweils wechselnder Drehrichtung verfahren.
e) Wird das Spiegelende erreicht, wird analog zu den Punkten a) bis d) verfahren oder der Beschriftungsvorgang beendet.

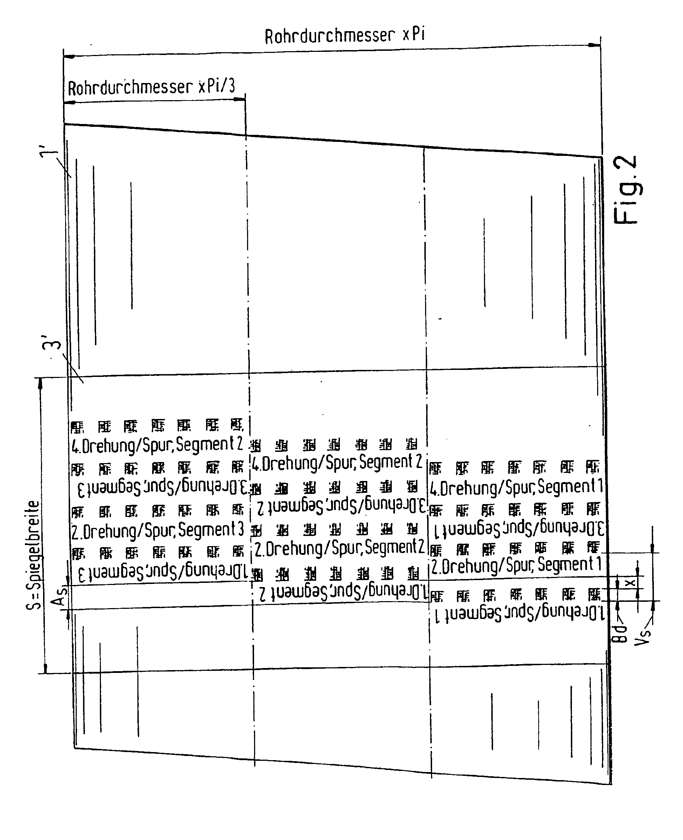

**Figur 2** zeigt in einer weiteren Ausführungsform die Beschriftung eines Rohres 1', wobei der Rohrumfang über jeweils 120° mit drei axial versetzten Segmenten 2 beschriftet wird.

### 3. Durchführung der Markierung gemäß Figur 2

a) wie 2 a)
b) wie 2 b)
c) Am Umfang des Drehkranzes befinden sich zum Auftragen der Spiegelfarbe jetzt drei Sprühpistolen, die zum Auftragen des Farbspiegels 3' jeweils um 120° versetzt über dem Rohrumfang axial versetzt angeordnet sind.
d) Am Umfang des Drehkranzes befinden sich zum Schreiben der Data-Matrix-Codes 4 ebenfalls drei Signierköpfe (Continous Inkjet oder Laser), die jeweils um 120° versetzt jedoch im Abstand von Aₛ entlang der Längsachse des Rohres 1' angeordnet sind.
e) Sowohl die Sprühpistolen als auch die Signierköpfe sind am Drehkranz über eine Verstelleinrichtung, die in radialer Richtung des Rohres wirkt, befestigt, um einen definierten Abstand zur Rohroberfläche bei unterschiedlichen Durchmessern zu gewährleisten.

Die Anzahl der Sprühpistolen/Signierköpfe bzw. die Varianten können entsprechend den betrieblichen Anforderungen z. B. an die Taktzeit und Instandhaltungsbelange angepasst bzw. kombiniert werden.

Nachfolgend sind die Vorteile der Erfindung noch einmal zusammengefasst:
- Drehung der Signierköpfe immer innerhalb von +-360°. Somit sind keine Schleifkontakte notwendig, kein Verknoten von Leitungen (Farbe).
- Durch versetzte Spuren (Segmente) wird ein Überschreiben der Spuren (Segmente) vermieden.
- Vollständige Beschriftung des Rohres über den gesamten Umfang.
- Einfache technische Anpassung an Taktzeiten durch Vervielfachung der Signierköpfe.

**Bezugszeichenliste**

| **Nr.** | **Bezeichnung** |
|---|---|
| 1, 1' | Rohr |
| 2 | Segmente |
| 3, 3' | Farbspiegel |
| 4 | Data-Matrix-Codes |
| S | Spiegelbreite |
| Bd | Breite - axiale Erstreckung - Data-Matrix-Code |
| X | lichter Abstand zwischen zwei benachbarten Segmenten |
| Aₛ | Abstand der Signierköpfe zueinander |
| Vₛ | Spurvorschub |

## Patentansprüche

1. Verfahren zur Einzelstückverfolgung metallischer Hohlkörper, insbesondere warmgefertigter Rohre aus Stahl, bei dem das einzelne Rohr (1,1') nach einem letzten Warmarbeitsgang mit einer unverwechselbaren auf dem Rohrumfang angeordneten Identifizierung versehen wird, die im Zulaufbereich zu den nachfolgenden Fertigungs- oder Prüfstationen während des Weitertransportes unabhängig von der Transportrichtung automatisch als Videobild abgelesen wird, wobei beim Durchlaufen aller vorgeschriebenen Fertigungs- und Prüfschritte bei den einzelnen Stationen die Identifizierung des individuellen Rohres aufgenommen und die erfasste Identifizierung mit der Vielzahl aller vorab eingegebenen Identifizierungen abgeglichen und der durchgeführte Fertigungs- oder Prüfschritt der erfassten Identifizierung zugeordnet wird, wobei die unverwechselbare Identifizierung als Data-Matrix-Code-Beschriftung in mehrfacher identischer Wiederholung kreisringförmig auf dem Umfang des Rohres (1,1') mittels einer mindestens einen Signierkopf enthaltenden und um das Rohr drehbaren Signiereinheit aufgebracht wird **dadurch gekennzeichnet,**
**dass** die Beschriftung des Rohrumfanges in mindestens zwei den Rohrumfang aufteilenden segmentierten Abschnitten - genannt Segmente (2) - erfolgt, wobei die Beschriftung segmentweise mit einer Drehung der Signiereinheit von weniger als 360° vorgenommen wird und die Segmente (2) bezogen auf die Rohrlängsachse einen axialen Versatz aufweisen der größer ist als die axiale Erstreckung des Data-Matrix-Codes (4).

2. Verfahren nach Anspruch 1
**dadurch gekennzeichnet,**
**dass** bei Einsatz eines Signierkopfes die Drehrichtung der Signiereinheit nach dem Aufbringen eines ersten Segmentes geändert wird und anschließend ein zweites Segment aufgebracht wird.

3. Verfahren nach Anspruch 1
**dadurch gekennzeichnet,**
**dass** die Beschriftung des Rohrumfanges in mindestens zwei Segmenten erfolgt, wobei beim Einsatz zweier Signierköpfe diese um 180° versetzt mit einem axialen Versatz um das Rohr angeordnet werden und die Aufbringung der Data-Matrix-Codes (4) über eine Drehung der Signiereinheit um mindestens 180° erfolgt.

4. Verfahren nach Anspruch 1
**dadurch gekennzeichnet,**
**dass** die Beschriftung des Rohrumfanges in mindestens drei Segmenten erfolgt, wobei beim Einsatz dreier Signierköpfe diese um 120° versetzt und mit einem axialen Versatz um das Rohr angeordnet sind und die Aufbringung der Data-Matrix-Codes (4) über eine Drehung der Signiereinheit um mindestens 120° erfolgt.

5. Verfahren nach Anspruch 1
**dadurch gekennzeichnet,**
**dass** die Beschriftung des Rohrumfanges in mindestens vier Segmenten erfolgt, wobei beim Einsatz von vier Signierköpfen diese um 90° versetzt und mit einem axialen Versatz um das Rohr angeordnet sind und die Aufbringung der Data-Matrix-Codes (4) über eine Drehung der Signiereinheit um mindestens 90° erfolgt.

6. Verfahren nach einem der Ansprüche 1 - 5
**dadurch gekennzeichnet,**
**dass** im Zuge der Beschriftung mit einer ersten segmentierten kreisringförmigen Beschriftung mit Data-Matrix-Codes (4) weitere segmentierte kreisringförmige Beschriftungen axial versetzt auf das Rohr aufgebracht werden.

7. Verfahren nach Anspruch 6
**dadurch gekennzeichnet,**
**dass** die mehrfache Aufbringung von axial versetzten, mehrfach segmentierten kreisringförmigen Beschriftungen mit einer der Anzahl der Umfangssegmente und einer der Anzahl der kreisringförmigen Beschriftungen entsprechenden Anzahl an Signierköpfen in der Signiereinheit gleichzeitig erfolgt.

8. Verfahren nach Anspruch 6
**dadurch gekennzeichnet,**
**dass** die weiteren segmentierten kreisringförmigen Beschriftungen nacheinander aufgebracht werden, wobei der axiale Versatz durch ein Verfahren der Signiereinheit in Rohrlängsrichtung über dem fest positionierten Rohr erfolgt.

9. Verfahren nach Anspruch 6
**dadurch gekennzeichnet,**
**dass** die weiteren segmentierten kreisringförmigen Beschriftungen nacheinander aufgebracht werden, wobei der axiale Versatz durch ein Verfahren des Rohres in Längsrichtung unter der fest positionierten Signiereinheit erfolgt.

10. Verfahren nach Anspruch 9
**dadurch gekennzeichnet,**
**dass** der axiale Versatz frei wählbar eingestellt werden kann.

## Claims

1. A method for the individual tracking of metallic hollow bodies, in particular hot-finished tubes of steel, in which the individual tube (1, 1') after a final hot-working operation is provided with an unmistakeable identification arranged on the periphery of the tube, which identification in the inlet region to the following manufacturing or testing stations is automatically read off as a video image during the onward transport independently of the direction of transport,
wherein upon passing through all the prescribed manufacturing and testing steps at the individual stations the identification of the individual tube is recorded and the detected identification is compared with the large number of all the identifications previously entered, and the manufacturing or testing step carried out is associated with the detected identification, wherein the unmistakeable identification is applied as a data matrix code marker in a multiple identical repetition in the form of a circle on the periphery of the tube (1, 1') by means of a marking unit containing at least one marking head which is rotatable about the tube,
**characterised in that** the marking of the periphery of the tube takes place in at least two segmented sections - referred to as segments (2) - which divide up the periphery of the tube, the marking being carried out segment-wise with a rotation of the marking unit of less than 360°, and the segments (2) having, relative to the longitudinal axis of the tube, an axial offset which is greater than the axial extent of the data matrix code (4).

2. A method according to Claim 1, **characterised in that** when using one marking head the direction of rotation of the marking unit is changed after the application of a first segment, and then a second segment is applied.

3. A method according to Claim 1, **characterised in that** the marking of the periphery of the tube takes place in at least two segments, wherein, when using two marking heads, these are arranged offset by 180° with an axial offset about the tube, and the application of the data matrix codes (4) takes place by rotation of the marking unit by at least 180°.

4. A method according to Claim 1, **characterised in that** the marking of the periphery of the tube takes place in at least three segments, wherein, when using three marking heads, these are offset by 120° and arranged with an axial offset about the tube, and the application of the data matrix codes (4) takes place by rotation of the marking unit by at least 120°.

5. A method according to Claim 1, **characterised in that** the marking of the periphery of the tube takes place in at least four segments, wherein, when using four marking heads, these are offset by 90° and arranged with an axial offset about the tube, and the application of the data matrix codes (4) takes place by rotation of the marking unit by at least 90°.

6. A method according to one of Claims 1 - 5, **characterised in that** in the course of the marking with a first segmented marker in the shape of a circular ring with data matrix codes (4), further segmented markers in the shape of a circular ring are applied axially offset to the tube.

7. A method according to Claim 6, **characterised in that** the multiple application of axially offset, multiply segmented markers in the shape of a circular ring with a number of marking heads which corresponds to the number of the peripheral segments and a number of marking heads which corresponds to the number of markers in the shape of a circular ring in the marking unit takes place simultaneously.

8. A method according to Claim 6, **characterised in that** the further segmented markers in the shape of a circular ring are applied in succession, the axial offset taking place by displacing the marking unit in the longitudinal direction of the tube above the fixedly-positioned tube.

9. A method according to Claim 6, **characterised in that** the further segmented markers in the shape of a circular ring are applied in succession, the axial offset taking place by displacing the tube in the longitudinal direction beneath the fixedly-positioned marking unit.

10. A method according to Claim 9, **characterised in that** the axial offset can be set in freely selectable manner.

## Revendications

1. Procédé pour le suivi individuel de corps creux métalliques, en particulier de tubes en acier fabriqués à chaud, procédé dans lequel le tube individuel (1, 1'), après une dernière étape de travail à chaud, est muni d'une identification qui est disposée d'une façon qu'on ne peut pas confondre sur la circonférence du tube et qui, dans la zone d'alimentation conduisant aux postes de fabrication et de contrôle suivants, est lue automatiquement sous forme d'image vidéo pendant la suite du transport indépendamment de la direction de transport, l'identification du tube individuel étant enregistrée lors de la traversée de toutes les étapes prescrites de fabrication et de contrôle dans les différents postes, et l'identification saisie étant comparée à la multiplicité de toutes les identifications entrées antérieurement, et l'étape de fabrication et de contrôle effectuée étant affectée à l'identification saisie, l'identification qu'on ne peut pas confondre étant appliquée sous forme d'inscription Data-Matrix-Code, de façon répétée plusieurs fois à l'identique, sous forme d'anneau circulaire, sur la circonférence du tube individuel (1, 1') au moyen d'une unité de signature pouvant tourner autour du tube et contenant au moins une tête de signature,
**caractérisé en ce que**
l'inscription effectuée sur la circonférence du tube s'effectue dans au moins deux tronçons segmentés - appelés segments (2) - divisant la circonférence du tube, l'inscription étant effectuée par segments avec une rotation de l'unité de signature inférieure à 360°, et les segments (2) présentant, par rapport à l'axe longitudinal du tube, un décalage axial qui est supérieur à l'étendue axiale du Data-Matrix-Code (4).

2. Procédé selon la revendication 1,
**caractérisé en ce que**,
lors de la mise en oeuvre de la tête de signature, le sens de rotation de l'unité de signature est modifié après l'application d'un premier segment, et ensuite un deuxième segment est appliqué.

3. Procédé selon la revendication 1,
**caractérisé en ce que**
l'inscription effectuée sur la circonférence du tube s'effectue dans au moins deux segments et, lors de la mise en oeuvre de deux têtes de signature, celles-ci étant disposées décalées avec un décalage axial de 180° autour du tube, et l'application des Data-Matrix-Codes (4) s'effectuant par le biais d'une rotation de l'unité de signature d'au moins 180°.

4. Procédé selon la revendication 1,
**caractérisé en ce que**
l'inscription effectuée sur la circonférence du tube s'effectue dans au moins trois segments et, lors de la mise en oeuvre de trois têtes de signature, celles-ci étant disposées décalées avec un décalage axial de 120° autour du tube, et l'application des Data-Matrix-Codes (4) s'effectuant par le biais d'une rotation de l'unité de signature d'au moins 120°.

5. Procédé selon la revendication 1,
**caractérisé en ce que**
l'inscription effectuée sur la circonférence du tube s'effectue dans au moins quatre segments et, lors de la mise en oeuvre de quatre têtes de signature, celles-ci étant disposées décalées avec un décalage axial de 90° autour du tube, et l'application des Data-Matrix-Codes (4) s'effectuant par le biais d'une rotation de l'unité de signature d'au moins 90°.

6. Procédé selon une des revendications 1 à 5,
**caractérisé en ce que**,
au cours de l'application de l'inscription avec une première inscription segmentée en forme d'anneau circulaire avec des Data-Matrix-Codes (4), d'autres inscriptions segmentées en forme d'anneau circulaire sont appliquées sur le tube avec un décalage axial.

7. Procédé selon la revendication 6,
**caractérisé en ce que**
l'application multiple d'inscriptions segmentées de façon multiple en forme d'anneau circulaire et décalées axialement s'effectue simultanément dans l'unité de signature avec un nombre de têtes de signature qui correspond au nombre de segments circonférentiels et au nombre d'inscriptions en forme d'anneau circulaire.

8. Procédé selon la revendication 6,
**caractérisé en ce que**
les autres inscriptions segmentées de façon multiple en forme d'anneau circulaire sont appliquées les unes après les autres, le décalage axial s'effectuant par un déplacement de l'unité de signature dans la direction longitudinale du tube sur le tube positionné de façon fixe.

9. Procédé selon la revendication 6,
**caractérisé en ce que**
les autres inscriptions segmentées de façon multiple en forme d'anneau circulaire sont appliquées les unes après les autres, le décalage axial s'effectuant par un déplacement du tube dans la direction longitudinale sous l'unité de signature positionnée de façon fixe.

10. Procédé selon la revendication 9,
**caractérisé en ce que**
le décalage axial peut être réglé librement.
